# EUROPEAN PATENT APPLICATION

(11) **EP 4 683 214 A1**
(43) Date of publication of application: **21.01.2026**
(21) Application number: 24845882.0
(22) Date of filing: 11.07.2024
(51) Int. Cl.: H02S 50/00, G06Q 50/06

(54) **APPARATUS FOR MANAGING INFORMATION OF PHOTOVOLTAIC POWER GENERATION SYSTEM**

(30) Priority: 26.07.2023 KR 20230097645; 28.07.2023 KR 20230099091
(71) Applicant: Hanwha Solutions Corporation, Jung-gu Seoul 04541 (KR)
(72) Inventor: LEE, Kangmin, Seoul 04541 (KR); KIM, Jeonghwan, Seoul 04541 (KR); BANG, Younggyun, Seoul 04541 (KR); KANG, Hyeonmin, Seoul 04541 (KR); KIM, Minho, Seoul 04541 (KR); GONG, Taesu, Seoul 04541 (KR)
(74) Representative: Mooser, Sebastian Thomas
(86) International application number: PCT/KR2024/009979
(87) International publication number: WO 2025/023579

(57) **Abstract**

A device, according to one aspect, comprises: an input unit for receiving an identifier, and a controller processor for, by using the identifier inputted from the input unit, generating identification information of a controller connected to a photovoltaic (PV) panel, where in the device may be included in the controller.

## Description

### Technical Field

The present disclosure relates to a device of managing information on a photovoltaic system.

### Background Art

In general, a photovoltaic system is equipped with a plurality of photovoltaic (PV) panels, and each panel may be connected to one module-level power electronics (MLPE) or one monitoring module.

The MLPE may perform maximum power point tracking control to operate PV panels at a maximum power point. The monitoring module monitors the power generation so that the PV panels may be managed.

A serial number of the MLPE or monitoring module is set to a fixed value when products are released. In addition, communication identification information (ID) of the MLPE or products is set randomly.

Therefore, when an installer mounts an MLPE or monitoring module on a PV panel, the installer has the hassle of having to directly match and manage the serial number and identification information of the MLPE or monitoring module.

### Disclosure of Invention

### Technical Problem

The present disclosure provides a device of managing information on a photovoltaic system.

### Solution to Problem

According to an aspect of the present disclosure, there is provided a device including an input unit configured to receive an identifier and a first processor configured to generate identification information of a controller connected to a photovoltaic panel using the identifier input from the input unit, wherein the device is included in the controller.

According to another aspect of the present disclosure, there is provided a user terminal including
a communication unit configured to communicate with a controller, an input unit configured to receive an identifier, and a second processor configured to generate identification information of the controller connected to a photovoltaic panel using the identifier input from the input unit and transmit the identification information of the controller to the controller through the communication unit.

According to another aspect of the present disclosure, there is provided a mobile terminal including a communication unit configured to communicate with a controller, a user interface unit, and a third processor configured to, when an application is executed, receive an identifier through the user interface unit, generate identification information of the controller connected to a photovoltaic panel, and transmit the identification information of the controller to the controller through the communication unit.

### Brief Description of the Drawings

FIG. 1 is a diagram illustrating an example of a device of managing information on a photovoltaic (PV) system according to an embodiment.
FIG. 2 is a diagram illustrating an example of a serial number of a PV panel according to an embodiment.
FIG. 3 is a diagram illustrating an example of a device according to an embodiment.
FIGS. 4A to 4C are diagrams illustrating examples of an input unit according to an embodiment.
FIG. 5 is a diagram illustrating an example of setting identification information according to an embodiment.
FIG. 6 is a diagram illustrating an example of matching results between identification information of PV panels and identification information according to an embodiment.
FIG. 7 is a diagram illustrating an example of a user terminal connected to a controller according to an embodiment.
FIG. 8 is a diagram illustrating an example of a mobile terminal connected to a controller according to an embodiment.

### Best Mode for Carrying out the Invention

A device according to an aspect may include an input unit receiving an identifier and a controller processor for generating identification information of a controller connected to photovoltaic (PV) panel using the identifier input from the input unit, wherein the device may be included in the controller.

### Mode for the Invention

The terms used in the embodiments are possibly selected from among currently well-known terms but may vary depending on the cases or intentions of those skilled in the art or on the advent of new technology, etc. In addition, in certain cases, there are terms arbitrarily selected by the applicant, and in this case, the meaning is described in detail in the relevant description. Therefore, terms used in the specification should be defined based on the meaning of the terms and the description throughout the specification, not just the name of the terms.

In the specification, unless explicitly described to the contrary, the word "comprise" or "include" is understood to imply the inclusion of stated constituent elements, not the exclusion of any other constituent elements

In addition, terms, such as "unit", "module", etc. described in the specification mean a unit that processes at least one function or operation, which may be implemented by hardware or software, or a combination of hardware and software.

In addition, although the terms "first," "second," etc. used in the specification may be used herein to describe various elements, these elements should not be limited by these terms. These terms are only used to distinguish one element from another.

The implementations described herein may be implemented in, for example, a method or a process, a device, a software program, a data stream, or a signal. Even if only discussed in the context of a single form of implementation (for example, discussed only as a method), the implementation of discussed features may also be implemented in other forms (for example, a device or a program). The device may be implemented in, for example, appropriate hardware, software, and firmware. The method may be implemented in, for example, a device such as, for example, a processor, which refers to processing devices in general, including, for example, a computer, a microprocessor, an integrated circuit, or a programmable logic device.

Hereinafter, embodiments according to the present disclosure are described in detail with reference to the accompanying drawings. The detailed description set forth below in conjunction with the accompanying drawings is intended to describe embodiments of the present disclosure and is not intended to represent the only embodiment in which the present disclosure may be practiced. In order to clearly describe the present disclosure in the drawings, parts unrelated to the description may be omitted, and like reference numerals may be used for like or similar components throughout the specification.

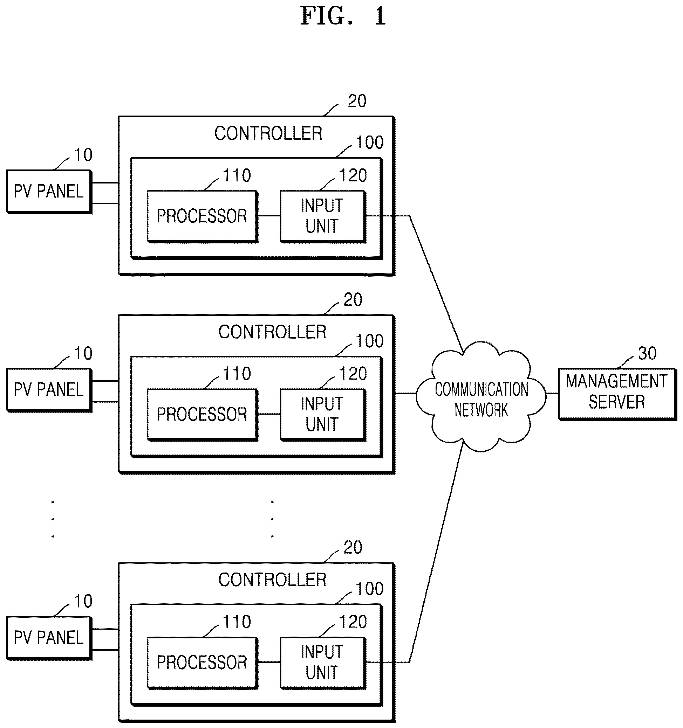

FIG. 1 is a diagram illustrating an example of a device of managing information on a photovoltaic system according to an embodiment.

Referring to FIG. 1, a device 100 for managing information on a photovoltaic system (hereinafter, referred to as "device 100") may arbitrarily set identification information of a controller 20 connected to a photovoltaic (PV) panel 10. Accordingly, the device 100 may match the identification information of the controller 20 with identification information of the PV panel 10.

The controller 20 may be a power facility connected to the PV panel 10. For example, the controller 20 may be a module-level power electronics (MLPE).

The MLPE may perform maximum power point tracking control on a module-by-module basis to operate solar cells at their maximum power point. To this end, the MLPE may include a monitoring module (not shown) that monitors information, such as voltage, current, and temperature of the PV panel 10 or a communication module (not shown) that may provide monitored information to an external device.

For example, an MLPE may be an optimizer or a micro-inverter.

As an example, if the MLPE is an optimizer, the photovoltaic system may include an inverter. In this case, one optimizer may be connected to each PV panel 10, and the optimizer may optimize power output from the PV panel 10 and output the optimized power to a single inverter (e.g., a string inverter). Power converted by the inverter (e.g., converting direct current to alternating current) may be output to a load or grid.

As another example, if the MLPE is a micro-inverter, one micro-inverter may be connected to each PV panel 10. In this case, the micro-inverter may convert power generated by the PV panel 10, and the converted power may be output to a load or grid.

In addition, the controller 20 may be a monitoring module.

However, the controller 20 is not limited to the examples described above and may be applied without limitation as long as the controller 20 may be connected with the PV panel 10 in a one-to-one manner.

The identification information of the controller 20 may be arbitrarily set by a user for communication or management of the controller 20. For example, the identification information of the controller 20 may be generated as at least one identifier input through an input unit 120. Identifiers may be numbers, letters, symbols, etc., and there is no particular limitation on the type of identifier. For example, the identification information of the controller 20 may be generated to have a regularity according to the arrangement structure or number of PV panels 10.

The PV panel 10 generates electricity using a photoelectric effect, and a plurality of PV panels 10 may form a PV panel array. For example, the PV panel array may include at least one PV panel string. Here, the PV panel string may be a set of PV panels 10 connected in series within the PV panel array.

When the PV panel array includes a plurality of PV panel strings, the PV panel strings may be connected in parallel to form the PV panel array. For example, a plurality of PV panels 10 may be arranged regularly, and as a result, the PV panel array may be formed through at least one PV panel string including the plurality of PV panels 10. Accordingly, the identification information of the controller 20 may also be set based on the regularity of the PV panels 10.

Below, an example of a photovoltaic system including at least one PV panel array is described.

The photovoltaic system may include a plurality of PV panel arrays, each PV panel array including at least one PV panel string including the plurality of PV panels 10. Therefore, each of the plurality of PV panels 10 needs to be managed individually.

For example, when a user installs the PV panel 10 or replaces the PV panel 10, the controller 20 may be connected to the PV panel 10. Here, the user may arbitrarily set the identification information of the controller 20 connected to each PV panel 10 to match the identification information of the PV panel 10 to the identification information of the controller 20. For example, the identification information of the PV panel 10 may be a serial number set during the production or shipment of the PV panel 10.

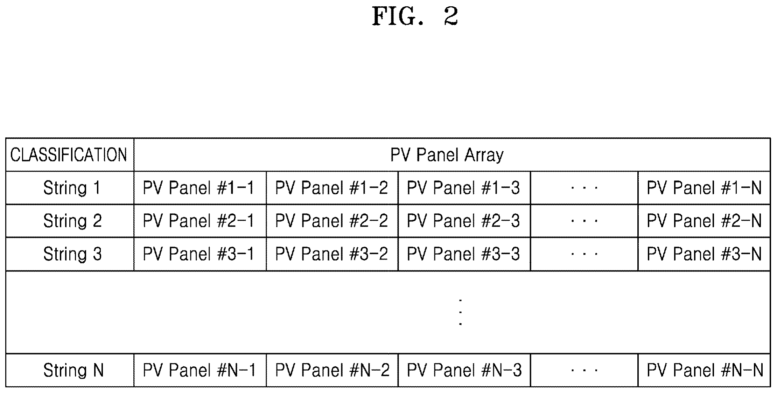

FIG. 2 is a diagram illustrating an example of a serial number of a PV panel according to an embodiment.

Referring to FIG. 2, the identification information of the PV panel 10 may include a combination of letters, numbers, or symbols. In addition, the identification information of the PV panel 10 may be set to have regularity according to an installation location or arrangement structure of the PV panel 10 but is not limited thereto.

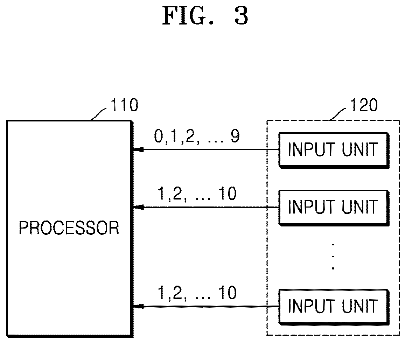

FIG. 3 is a diagram illustrating an example of the device 100 according to an embodiment.

Referring to FIG. 3, the device 100 includes a processor 110 and the input unit 120.

The input unit 120 may receive an identifier. For example, the identifier may be, but is not limited to, letters, numbers, or symbols. For example, the input unit 120 may be at least one of a rotary switch, a knob switch, and a dip switch.

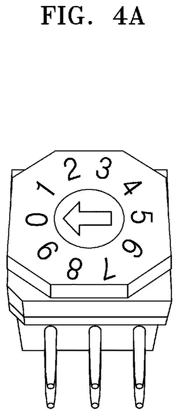

FIGS. 4A to 4C are diagrams illustrating examples of an input unit according to an embodiment.

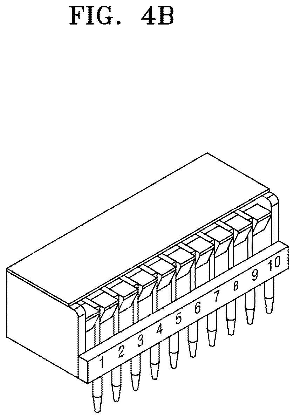

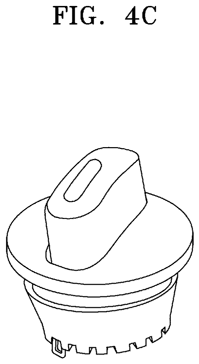

FIG. 4A is an example of a rotary (encoder) switch, FIG. 4B is an example of a knob switch, and FIG. 4C is an example of a dip switch.

For example, the device 100 may include a plurality of input units 120. When the device 100 includes a plurality of input units 120, the types of the input units 120 may be the same but may also be different. For example, the input unit 120 may include only a plurality of rotary switches, only a plurality of knob switches, or only a plurality of dip switches. Alternatively, the input unit 120 may include at least one rotary switch and at least one knob switch, may include at least one knob switch and at least one dip switch, may include at least one rotary switch and at least one dip switch, or may include at least one rotary switch, at least one knob switch, and at least one dip switch. In other words, the input unit 120 may include different types of switches.

Alternatively, the input unit 120 may be a mechanical button or a touch-type button that may input an identifier (e.g., a letter, number, or symbol). In addition, the input unit 120 may include a plurality of mechanical buttons or touch-type buttons.

In other words, the input unit 120 is not particularly limited in its type as long as it may input an identifier.

Referring back to FIG. 3, the processor 110 may receive an identifier from the input unit 120. In addition, the processor 110 may generate identification information of the controller 20 connected to the PV panel 10 using an identifier input from the input unit 120.

For example, the processor 110 may process an instruction of a computer program by performing basic arithmetic, logic, and input/output operations. Here, the instruction may be provided from memory or an external device (e.g., a user terminal, a mobile terminal, etc.). In addition, the processor 110 may generally control the operation of other components included in the device 100.

Meanwhile, the processor 110 may perform at least some of the data analysis, processing, and result information generation for performing the aforementioned operations using at least one of machine learning, neural network, or deep learning algorithm as a rule-based or artificial intelligence algorithm. Examples of neural networks may include models, such as convolutional neural network (CNN), deep neural network (DNN), and recurrent neural network (RNN).

For example, the processor 110 may be implemented as an array of a number of logic gates or may be implemented as a combination of a general-purpose microprocessor and a memory storing a program that may be executed on the microprocessor. For example, the processor 110 may include a general-purpose processor, a central processing unit (CPU), a microprocessor, a digital signal processor (DSP), a controller, a microcontroller, a state machine, and the like. In some environments, the processor 110 may include an application-specific integrated circuit (ASIC), a programmable logic device (PLD), a field programmable gate array (FPGA), and the like. For example, the processor 110 may refer to a combination of processing devices, such as a combination of a digital signal processor (DSP) and a microprocessor, a combination of a plurality of microprocessors, a combination of one or more microprocessors in combination with a DSP core, or any other combinations of such components.

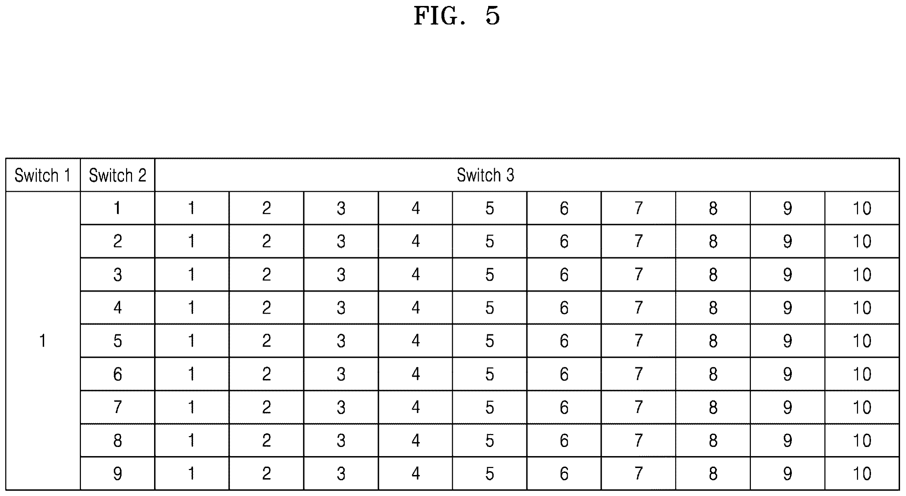

FIG. 5 is a diagram illustrating an example of setting identification information according to an embodiment.

FIG. 5 shows an example in which a rotary switch, a knob switch, and a dip switch are used as an input unit 120. For example, in FIG. 5, Switch 1 may be a rotary switch, Switch 2 may be a knob switch, and Switch 3 may be a dip switch.

For example, if N rotary switches (0 to 9), M knob switches (1 to 10), and L dip switches (1 to 10) are selectively used, the identification information of the controller 20 may be set to a total of N×M×L pieces.

Therefore, when installing the PV panel 10, an identifier may be input through each of the rotary switch, knob switch, and dip switch, by considering the regularity of the user's PV panel 10 or controller 20.

Alternatively, the input unit 120 may be a mechanical button or a touch-type button. When the input unit 120 includes a plurality of mechanical buttons, the processor 110 may receive an identifier from each mechanical button and set identification information of the controller 20. Even when the input unit 120 is a touch-type button, the processor 110 may set the identification information of the controller 20 as described above.

In addition, when the input unit 120 is a single mechanical button, the processor 110 may sequentially receive identifiers from the mechanical button and set the identification information of the controller 20 by combining the identifiers according to an input order of the identifiers. Even if the input unit 120 is a single touch-type button, the processor 110 may set the identification information of the controller 20 as described above.

When the identification information of the controller 20 is generated, the processor 110 may match the generated identification information of the controller 20 to the identification information of the PV panel 10. To this end, the processor 110 may obtain identification information of the PV panel 10 depending on whether the processor 110 is connected to the PV panel 10.

For example, the identification information of the PV panel 10 may be stored in advance in a memory connected to the processor 110. In this case, when the processor 110 is connected to the PV panel 10, the processor 110 may extract identification information of the PV panel 10 from the memory.

The identification information of the PV panel 10 may be stored in a separate external device. In this case, the processor 110 may receive the identification information of the PV panel 10 from the external device when connected to the PV panel 10.

As the identification information of the PV panel 10 is obtained, the processor 110 may match the identification information of the PV panel 10 to the identification information of the controller 20.

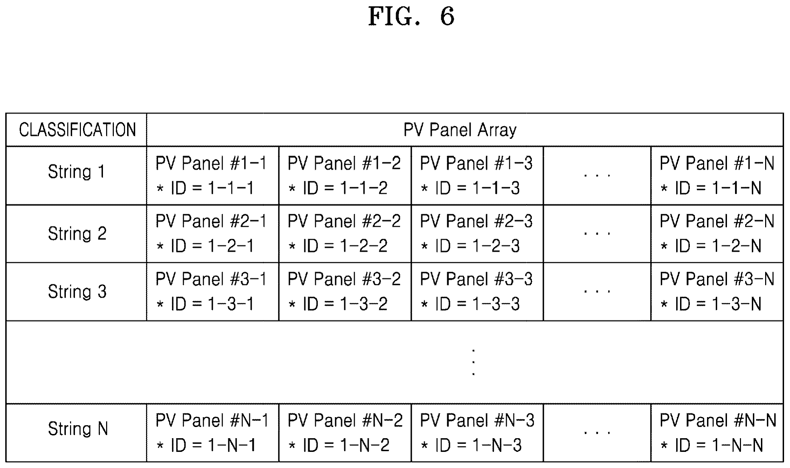

FIG. 6 is a diagram illustrating an example of matching results between identification information of PV panels 10 and identification information of the controller 20 according to an embodiment.

FIG. 6 illustrates an example in which identification information of each PV panel 10 is matched to identification information of the controller 20 when a PV panel array has N PV panel strings and each PV panel string has N PV panels 10. Here, N refers to a natural number greater than or equal to 1.

Referring to FIG. 6, in a first PV panel string (String 1), pieces of identification information of the PV panels 10 may be set to 'PV panel #1-1' to 'PV panel #1-N', respectively. In addition, in the first PV panel string (String 1), pieces of identification information of the controller 20 connected to the PV panels 10 may be set to 'ID=1-1-1' to 'ID=1-1-N', respectively.

In an N-th PV panel string (String 1), pieces of identification information of the PV panels 10 may be set to 'PV panel #N-1' to 'PV panel #N-N', respectively. In addition, in the N-th PV panel string (String 1), pieces of identification information of the controller 20 connected to the PV panels 10 may be set to 'ID=1-N-1' to 'ID=1-N-N', respectively.

In this case, in the first PV panel string (String 1), pieces of the identification information of the PV panels 10 and pieces of the identification information of the controller 20 may be matched to 'PV panel #1-1*ID=1-1-1' to 'PV panel #1-N*ID=1-1-N', respectively. In this manner, in the N-th PV panel string (String N), pieces of the identification information of the PV panels 10 and pieces of the identification information of the controller 20 may be matched to 'PV panel #N-1*ID=1-N-1' to 'PV panel #N-N*ID=1-N-N', respectively.

As described above, the processor 110 may transmit the identification information of the controller 20 and the identification information of the PV panel 10 matched to each other to a management server 30.

Referring back to FIG. 1, the device 100 may be included in the controller 20. For example, when the controller 20 is an MLPE, the device 100 may be included in the MLPE. Accordingly, the processor 110 of the device 100 may be a processor mounted on the controller 20, for example, a processor of the MLPE.

Alternatively, the processor 110 and the processor of the controller 20 may be included in the controller 20 independently of each other. In this case, the processor 110 may generate identification information of the controller 20 and transfer the generated identification information to the processor of the controller 20.

For example, the processor 110 may be connected to a memory, and the memory may store instructions for performing operations, steps, etc. according to embodiments of the present disclosure. Here, the memory may include, but is not limited to, magnetic storage medium or flash storage medium in addition to volatile storage devices that require power to maintain stored information.

In addition, the processor 110 may be configured to perform each function separately at hardware, software, or a logic level. In such a case, dedicated hardware may be used to perform each function.

The management server 30 may collect matching information between the identification information of the PV panel 10 and the identification information of the controller 20 from each processor 110. The management server 30 may finally generate matching information for all PV panels 10 included in the photovoltaic system and controllers 20 connected to the PV panels 10 based on the matching information. The user may manage and operate the PV panel 10 included in the photovoltaic system and the controller 20 connected to the PV panel 10 by using the entire matching information.

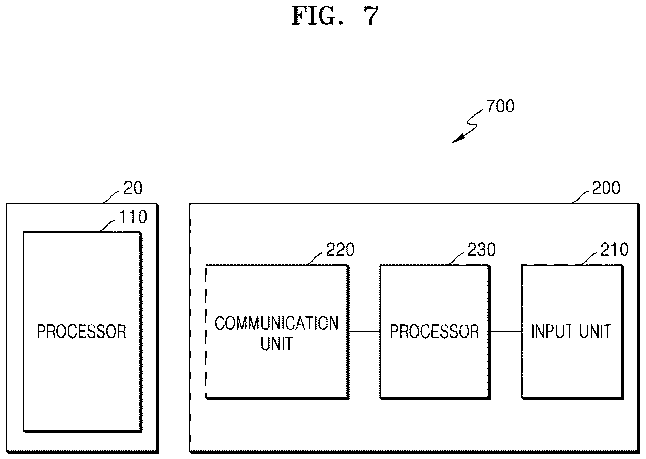

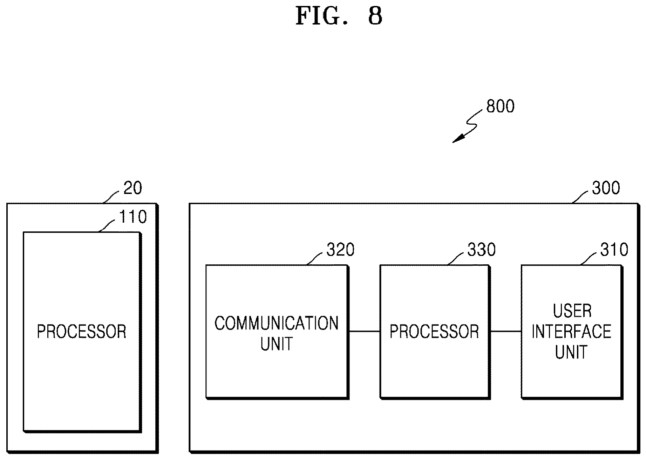

Below, other implementation examples of the controller 20 are described with reference to FIGS. 7 and 8. Meanwhile, the controller 20 and processor 110 illustrated in FIGS. 7 and 8 are identical to the controller 20 and processor 110 described above with reference to FIGS. 1 to 6. Therefore, the operation of the controller 20 and processor 110 described above with reference to FIGS. 1 to 6 may be equally applied to the controller 20 and processor 110 illustrated in FIGS. 7 and 8.

FIG. 7 is a diagram illustrating an example of a user terminal 200 connected to the controller 20 according to an embodiment.

Referring to FIG. 7, the photovoltaic system 700 may include the controller 20 and a user terminal 200. Comparing FIG. 1 with FIG. 7, the input unit 120 included in the device 100 of FIG. 1 may be implemented as a separate user terminal 200. In other words, the device 100 of FIG. 1 may include the processor 110 and the input unit 120, but in FIG. 7, the device 100 may include only a processor 110.

For example, the user terminal 200 may include an input unit 210, a communication unit 220, and a processor 230. The user terminal 200 may be manufactured as a portable device. Referring to FIG. 7, because the user terminal 200 is not included in the controller 20, the cost and time required for manufacturing the controller 20 may be reduced. In addition, because the user may set the identification information of the controller 20 while carrying the user terminal 200, the user's work efficiency may be significantly improved.

The input unit 210 may receive an identifier. For example, the identifier may be a letter, a number, or a symbol. There are no specific limitations on the type of identifier. For example, the input unit 210 may be at least one of a rotary switch, a knob switch, and a dip switch.

For example, the user terminal 200 may include a plurality of input units 210. When a user terminal 200 includes a plurality of input units 210, the types of the input units 210 may be the same or may be different from each other. For example, the input unit 210 may include only a plurality of rotary switches, only a plurality of knob switches, or only a plurality of dip switches. Alternatively, the input unit 210 may include at least one rotary switch and at least one knob switch, may include at least one knob switch and at least one dip switch, may include at least one rotary switch and at least one dip switch, or may include at least one rotary switch, at least one knob switch, and at least one dip switch. In other words, the input unit 210 may include different types of switches.

Alternatively, the input unit 210 may be a mechanical button or a touch-type button that may input an identifier (e.g., a letter, number, or symbol). In addition, the input unit 210 may include a plurality of mechanical buttons or touch-type buttons.

In other words, the type of the input unit 210 is not particularly limited, as long as the input unit 210 may be able to input an identifier.

For example, if the input unit 210 includes a plurality of mechanical buttons, the processor 110 may receive an identifier from each mechanical button and set identification information of the controller 20. Even if the input unit 210 is a touch-type button, the processor 110 may set the identification information of the controller 20 as described above.

In addition, when the input unit 210 is a single mechanical button, the processor 110 may sequentially receive identifiers from the mechanical button and combine the identifiers according to an input order of the identifiers to set the identification information of the controller 20. Even if the input unit 210 is a single touch-type button, the processor 110 may set the identification information of the controller 20 as described above.

The communication unit 220 may perform wired and wireless communication with the controller 20 through a communication network. The communication unit 220 may transmit the identification information of the controller 20 generated by the processor 230 to the controller 20.

For example, the communication network may adopt 3rd Generation partnership project (3GPP), long term evolution (LTE), 5G (Generation), world interoperability for microwave access (WIMAX), wired and wireless Internet, local area network (LAN), wireless local area network (WLAN), wide area network (WAN), personal area network (PAN), Bluetooth, wireless fidelity (Wi-Fi), etc., but is not particularly limited thereto. The communication network may be a power line communication (PLC).

The processor 230 may receive an identifier from the input unit 210. The processor 230 may generate identification information of the controller 20 connected to the PV panel 10 using the identifier input from the input unit 210.

For example, when the input unit 210 is at least one of a rotary switch, a knob switch, and a dip switch, the processor 230 may receive an identifier through the switch and set the identification information of the controller 20.

Alternatively, the input unit 210 may be a mechanical button or a touch-type button.

When the input unit 210 includes a plurality of mechanical buttons, the processor 230 may receive an identifier from each mechanical button and set identification information of the controller 20. Even if the input unit 210 is a touch-type button, the processor 230 may set the identification information of the controller 20 as described above.

In addition, when the input unit 210 is a single mechanical button, the processor 230 may sequentially receive identifiers from the mechanical button and combine the identifiers according to an input order of the identifiers to set the identification information of the controller 20. Even if the input unit 210 is a single touch-type button, the processor 230 may set the identification information of the controller 20 as described above.

The processor 230 may transmit the generated identification information of the controller 20 to the processor 110 through the communication unit 220. In addition, the processor 110 may match the identification information of the controller 20 to the identification information of the PV panel 10.

That is, the processor 110 may receive identification information of the controller 20 and match the generated identification information of the controller 20 to the identification information of the PV panel 10. To this end, the processor 110 may obtain identification information of the PV panel 10 when connected to the PV panel 10.

For example, the identification information of the PV panel 10 may be stored in advance in a memory connected to the processor 110. In this case, when the processor 110 is connected to the PV panel 10, the processor 110 may extract identification information of the PV panel 10 from the memory.

The identification information of the PV panel 10 may not be stored in memory. That is, the identification information of the PV panel 10 may be stored in a separate external device. In this case, the processor 110 may receive the identification information of the PV panel 10 from an external device when connected to the PV panel 10.

As the identification information of the PV panel 10 is obtained, the processor 110 may match the identification information of the PV panel 10 to the identification information of the controller 20.

As an example, the processor 110 may transmit the identification information of the controller 20 and identification information of the PV panel 10 matched to each other to the management server 30.

As another example, the processor 230 may transfer an identifier to the processor 110. In addition, the processor 110 may generate identification information of the controller 20 using the identifier received from the processor 230. In addition, the processor 110 may match the identification information of the controller 20 to the identification information of the PV panel 10.

FIG. 8 is a diagram illustrating an example of a mobile terminal 300 connected to the controller 20 according to an embodiment.

Referring to FIG. 8, a photovoltaic system 800 may include the controller 20 and a mobile terminal 300. Comparing FIG. 1 with FIG. 8, the input unit 120 included in the device 100 of FIG. 1 may be implemented as a separate mobile terminal 300. In other words, the device 100 of FIG. 1 includes the processor 110 and the input unit 120, but in FIG. 8, the device 100 may include only the processor 110.

For example, the mobile terminal 300 may be implemented as a computer or portable terminal that may connect to a server or other terminal through a network. For example, the computer may be a notebook or laptop computer with a WEB browser. Alternatively, the computer may be a wireless communication device that ensures portability and mobility, such as a smartphone, tablet PC, or wearable device.

For example, the mobile terminal 300 may include a user interface unit 310, a communication unit 320, and a processor 330.

The communication unit 320 may perform wired and wireless communication with the controller 20 through a communication network. The communication unit 320 may transmit the identification information of the controller 20 generated by the processor 330 to the controller 20.

For example, the communication network may adopt 3GPP, LTE, 5G, WIMAX, wired and wireless Internet, LAN, WLAN, WAN, PAN, Bluetooth, Wi-Fi, etc., but is not particularly limited thereto.

The user interface unit 310 may provide a user interface. For example, the user interface unit 310 may be a medium that allows a user to issue a command to the processor 330 to set the identification information of the controller 20, input an identifier, or perform other specific functions.

For example, the user interface unit 310 may be touch-based and include a touch screen and a display, or the touch screen and the display may be implemented as a single device.

For example, the touch screen may include a sensing array, which may include wires arranged in a row direction or a column direction. The touch screen may have a plurality of sensor nodes formed at the intersections of the wires.

The user interface unit 310 may receive an identifier from the user. For example, the identifier may be numbers, letters, symbols, etc., and the type of identifier is not particularly limited.

An application may be loaded onto the processor 330. For example, when an application execution command is input through the user interface unit 310, the processor 330 may execute the application. As the application runs, the processor 330 may receive an identifier through the user interface 310.

The processor 330 may receive an identifier through the user interface unit 310 and generate identification information of the controller 20 connected to the PV panel 10. In this case, the third processor 330 may combine identifiers in chronological order to generate the identification information of the controller 20 . In addition, the processor 330 may transmit the generated identification information of the controller 20 to the processor 110. In addition, the processor 110 may match the identification information of the controller 20 to the identification information of the PV panel 10.

That is, the processor 110 may receive the identification information of the controller 20 and match the generated identification information of the controller 20 to the identification information of the PV panel 10. To this end, the processor 110 may obtain the identification information of the PV panel 10 when connected to the PV panel 10.

For example, the identification information of the PV panel 10 may be stored in advance in a memory connected to the processor 110. In this case, when the processor 110 is connected to the PV panel 10, the processor 110 may extract the identification information of the PV panel 10 from the memory.

The identification information of the PV panel 10 may not be stored in the memory. That is, the identification information of the PV panel 10 may be stored in a separate external device. In this case, the processor 110 may receive the identification information of the PV panel 10 from the external device depending on whether the processor 110 is connected to the PV panel 10.

As the identification information of the PV panel 10 is obtained, the processor 110 may match the identification information of the PV panel 10 to the identification information of the controller 20.

As an example, the processor 110 may transmit the identification information of the controller 20 and the identification information of the PV panel 10 matched to each other to the management server 30.

As another example, the processor 330 may transfer the identifier to the processor 110. In addition, the processor 110 may generate the identification information of the controller 20 using the identifier received from the third processor 330. In addition, the processor 110 may match the identification information of the controller 20 to the identification information of the PV panel 10.

Meanwhile, the aforementioned method may be written as a program that may be executed on a computer and may be implemented in a general-purpose digital computer that operates the program using a computer-readable recording medium. In addition, a data structure used in the aforementioned method may be recorded on a computer-readable recording medium through various units. The computer-readable recording medium includes storage medium, such as magnetic storage medium (e.g., ROM, RAM, USB, floppy disk, hard disk, etc.) and optical read medium (e.g., CD-ROM, DVD, etc.).

Those skilled in the art related to the present embodiment will understand that the present disclosure may be implemented in a modified form without departing from the essential characteristics. Therefore, the disclosed methods should be considered from an explanatory rather than a limiting perspective, and the scope is indicated in the claims, not the foregoing description, and should be interpreted to include all differences within the equivalent scope.

## Claims

1. A device comprising:
an input unit configured to receive an identifier; and
a first processor configured to generate identification information of a controller connected to a photovoltaic (PV) panel using the identifier input from the input unit,
wherein the device is included in the controller.

2. The device of claim 1, wherein
the first processor is configured to match identification information of the PV panel to the identification information of the controller.

3. The device of claim 2, wherein
the first processor is configured to extract the identification information of the PV panel and match the extracted identification information of the PV panel to the identification information of the controller, based on whether the first processor is connected to the PV panel.

4. The device of claim 3, wherein
the first processor is further configured to store the identification information of the PV panel and extract the identification information of the panel, based on whether the first processor is connected to the PV panel.

5. The device of claim 3, wherein
the first processor is further configured to receive the identification information of the PV panel depending on whether the first processor is connected to the PV panel, and store the identification information of the PV panel.

6. The device of claim 1, wherein
the input unit includes
at least one of a rotary switch, a knob switch, a dip switch, a mechanical button, and a touch-type button.

7. The device of claim 1, wherein
the first processor is further configured to combine the identifier in an input order to generate the identification information of the controller.

8. The device of claim 1, wherein
the controller includes
module-level power electronics (MLPE) and
the MLPE is connected to the PV panel in a one-to-one manner.

9. A user terminal comprising:
a communication unit configured to communicate with a controller; an input unit configured to receive an identifier; and
a second processor configured to generate identification information of the controller connected to a photovoltaic (PV) panel using the identifier input from the input unit and transmit the identification information of the controller to the controller through
the communication unit.

10. The user terminal of claim 9, wherein
the input unit includes
at least one of a rotary switch, a knob switch, a dip switch, a mechanical button, and a touch-type.

11. The user terminal of claim 9, wherein
the second processor is configured to
generate the identification information of the controller by combining the identifier in an input order.

12. The user terminal of claim 9, wherein
the controller includes
a first processor configured to match the identification information of the controller received through the communication unit to identification information of the PV panel.

13. The user terminal of claim 12, wherein
the first processor is further configured to
extract the identification information of the PV panel and match the extracted identification information of the PV panel to the identification information of the controller, based on whether the first processor is connected to the PV panel.

14. The user terminal of claim 13, wherein
the first processor is further configured to
store the identification information of the PV panel and extract the identification information of the panel, based on whether the first processor is connected to the PV panel.

15. The user terminal of claim 13, wherein
the first processor is further configured to
receive the identification information of the PV panel depending on whether the first processor is connected to the PV panel, and store the identification information of the PV panel.

16. A mobile terminal comprising:
a communication unit configured to communicate with a controller; a user interface unit; and
a third processor configured to, when an application is executed, receive an identifier through the user interface unit, generate identification information of the controller connected to a PV panel, and transmit the identification information of the controller to the controller through the communication unit.

17. The mobile terminal of claim 16, wherein
the third processor is further configured to
generate the identification information of the controller by combining the identifier input from the user interface unit in chronological order.

18. The mobile terminal of claim 16, wherein
the controller includes
a first processor configured to match the identification information of the controller received through the communication unit to identification information of the PV panel.

19. The mobile terminal of claim 18, wherein
the first processor is further configured to
extract the identification information of the PV panel and match the extracted identification information of the PV panel to the identification information of the controller, based on whether the first processor is connected to the PV panel.

20. The mobile terminal of claim 19, wherein
the first processor is further configured to
store the identification information of the PV panel and extract the identification information of the panel, based on whether the first processor is connected to the PV panel.
